(19) Europäisches Patentamt

European Patent Office

Office européen des brevets

(11) Veröffentlichungsnummer: **0 278 068 B1**

(12) **EUROPÄISCHE PATENTSCHRIFT**

(45) Veröffentlichungstag der Patentschrift: **11.03.92**

(21) Anmeldenummer: **87116776.3**

(22) Anmeldetag: **13.11.87**

(51) Int. Cl.5: **B64C 15/02**, F02K 1/00

(54) **Schubvektorsteuerung für Luftfahrzeuge.**

(30) Priorität: **20.12.86 DE 3643823**

(43) Veröffentlichungstag der Anmeldung:
**17.08.88 Patentblatt 88/33**

(45) Bekanntmachung des Hinweises auf die
Patenterteilung:
**11.03.92 Patentblatt 92/11**

(84) Benannte Vertragsstaaten:
**ES FR GB IT SE**

(56) Entgegenhaltungen:
**DE-C- 3 420 441**
**US-A- 3 912 202**

(73) Patentinhaber: **Messerschmitt-Bölkow-Blohm
Gesellschaft mit beschränkter Haftung
Robert-Koch-Strasse
W-8012 Ottobrunn(DE)**

(72) Erfinder: **Müller, Werner
Haus 25
W-8018 Pullenhofen(DE)**

## Beschreibung

Die Erfindung betrifft eine Schubvektorsteuerung für Luftfahrzeuge, gemäß dem Oberbegriff des Patentanspruches 1.

Ausgehend von den derzeit geltenden militärtaktischen Grundsätzen werden an moderne Kampf- bzw. Jagdflugzeuge insbesondere im Hinblick auf die Flugeigenschaften Anforderungen gestellt, welche mit herkömmlichen technischen Lösungen nicht oder nur unzureichend erfüllt werden können. Dazu zählt u.a. die Forderung nach großer Wendigkeit bei extrem niedrigen Fluggeschwindigkeiten. Infolge niedriger Anströmgeschwindigkeit und ungünstiger Anströmrichtung (hohe Anstellwinkel) ist die Wirksamkeit aerodynamisch, d.h. von Umgebungsluft angeströmter Steuerflächen dabei sehr gering oder nicht mehr gegeben. Einzig sinnvolle Alternative ist in der Regel ein gezieltes Ablenken des energiereichen Triebwerks-Abgasstrahles, wofür VTOL-Flugzeuge ein besonders augenfälliges Beispiel sind. Doch auch dabei können sich Schwierigkeiten ergeben: Materialprobleme infolge der hohen Abgastemperatur (bis ca. 2000 K), Festigkeits- und Schwingungsprobleme infolge der hohen Strömungsgeschwindigkeiten, negative Auswirkungen auf den Triebwerksdurchsatz (m) durch Rückstaueffekte etc.. Zur Vermeidung von Temperaturproblemen ist es üblich, axial hinter der Triebwerksdüse ein im Querschnitt größeres Ringruder anzuordnen, welches den Abgasstrahl mit einem kühlenden Mantel von durch Ejektorwirkung angesaugter Umgebungsluft einhüllt, wodurch die Ruderstruktur relativ kühl bleibt (max. ca. 300° C). Die Querschnittsform des Ringruders ist der Düsenform angepaßt und meist rund oder rechteckig. Eine solche Anordnung ist beispielsweise in den Figuren 4 bis 6 der DE-B-11 00 385 gezeigt. Das Strahlablenkungsverhalten derartiger EjektorRingruder weist sog. Totzonen auf, d.h. das Ruder muß erst um einen gewissen Winkel ausgelenkt werden, ehe auch der Abgasstrahl abgelenkt wird. Die Größe dieses Totwinkels variiert je nach Flugzustand und - bei Überschalltriebwerken mit Verstelldüsen - besonders stark mit der momentanen Größe des Düsenquerschnittes. Dieses schwer voraussehbare Verhalten macht eine feinfühlige Steuerung und Regelung praktisch unmöglich, mithin entfällt die Verwendung bei Hochleistungs-Flugzeugen. Man könnte das Ringruder auch so klein machen, daß es immer am oder im Düsenstrahl liegt. Dadurch wären aber das Ruder und ggf. auch Teile der Lagerung und Bestätigungsmechanik ständig den hohen Abgastemperaturen ausgestzt, worunter die Lebensdauer und die Zuverlässigkeit leiden würden.

Die DE-C-34 20 441 zeigt eine Strahlsteuerung, bei welcher in einer Triebwerksdüse mit festem Durchmesser ein Ruderkreuz mit beweglichen Klappen (11 bis 14) angeordnet ist, welches bei Ausfall oder Unwirksamkeit der aerodynamischen Ruder (4 bis 8) Bewegungen um die Nick-, Gier- und Rollachse ermöglicht und somit die Flugsicherheit erhöht. Die Klappen (11 bis 14) sind vorzugsweise so angeordnet, daß sie nicht im heißesten Kern (17) des Abgasstrahles liegen. Dennoch sind die Klappen und Teile ihrer Lagerung relativ hohen Temperaturen ausgesetzt.

Versuche haben gezeigt, daß mit platten- oder flügelförmigen Rudern in oder hinter der Triebwerksdüse zwar keine Totwinkel auftreten, daß aber auch nur eine relativ schwache Strahlablenkung (max. ca. 20°) möglich ist. Zur Erhöhung der Flugsicherheit mag dies ausreichen, eine entscheidende Verbesserung der Wendigkeit ist damit aber nicht zu erwarten.

Somit liegt der Erfindung die Aufgabe zugrunde, eine Schubvektorsteuerung für Luftfahrzeuge mit Verstelldüsen anzugeben, welche konstruktiv einfach, robust, langlebig und strömungstechnisch besonders wirkungsvoll ist.

Diese Aufgabe wird durch die im Patentanspruch 1 gekennzeichneten Merkmale gelöst.

Die Erfindung kombiniert also ein bekanntes, nach dem Ejektorprinzip arbeitendes Ringruder mit einer oder mehreren, fest darin angeordneten Ruderplatten, welche parallel zu den vorgesehenen Schwenkachsen ausgerichtet sind.

Auf diese Weise bleibt das Ringruder samt Lagerstellen und Betätigungsmechanik kühl, was sich positiv auf die Lebensdauer und die Zuverlässigkeit auswirkt. Heiß arbeitet nur der Mittelteil der Ruderplatten, die dabei auftretenden Standzeitprobleme sind inzwischen auch ohne Zusatzkühlung werkstoffseitig lösbar (beschichtetes CFC).

Wie Versuche gezeigt haben, wird durch den Einbau der Ruderplatten über den ganzen Arbeitsbereich der vorgeschalteten Verstelldüse ein weitgehend lineares Strahlablenkverhalten ohne Totbereiche erzielt. Der strömungstechnische Beitrag des Ringruders zeigt sich darin, daß wesentlich größere Strahlablenkwinkel erreichbar sind als bei freistehenden Ruderplatten.

Die Verbindung der Ruderplatten mit dem Ringruder ist so ausgeführt, daß ungünstige Wärmeströme und Thermospannungen weitgehend vermieden werden.

Die Unteransprüche 2 bis 4 enthalten bevorzugte Ausgestaltungen der Erfindung.

Die Erfindung wird nachfolgend anhand der in der Zeichnung dargestellten Ausführungsbeispiele noch näher erläutert. Dabei zeigen in vereinfachter Darstellung:

Fig. 1     ein Luftfahrzeug mit Schubvektorsteuerung in perspektivischer Ansicht,

Fig. 2     einen Querschnitt durch die Verbindungsstelle Ringruder/Ruderplatte,

Fig. 3    ein Diagramm mit dem qualitativen Verlauf des Strahlablenkwinkels in Abhängigkeit vom Winkelausschlag des Ruders für die erfindungsgemäße Ausführung und zwei Ausführungen nach dem Stand der Technik.

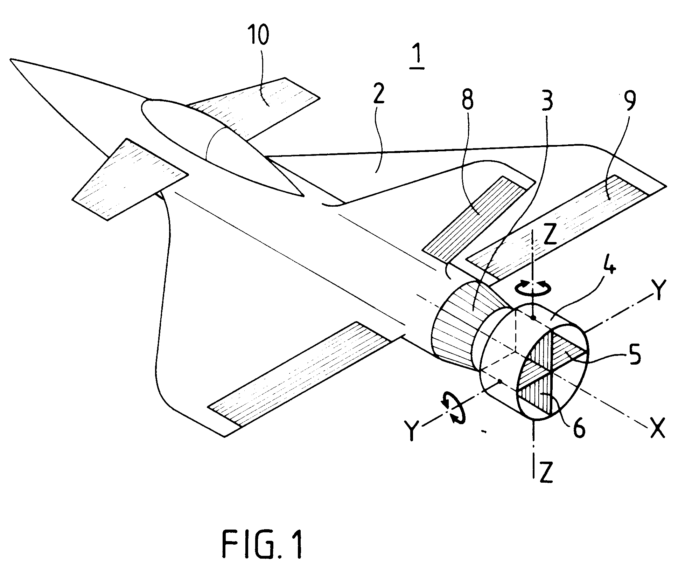

In Fig. 1 ist die erfindungsgemäße Schubvektorsteuerung 1 an einem einstrahligen Jagd- oder Kampfflugzeug in "Enten"-Bauart angeordnet. Sie ist aber ebenso für mehrstrahlige "Enten"-Flugzeuge (z.B. EFA) und für ein- und mehrstrahlige Flugzeuge mit konventioneller aerodynamischer Auslegung (Tragflügel und getrenntes Heck-Höhenleitwerk, Delta-Tragflügel ohne getrenntes Höhenleitwerk) geeignet. Auch unbemannte, strahlgetriebene Flugkörper, welche besonders wendig und reaktionsschnell sein müssen (z.B. für Flug in extremer Bodennähe), könnten mit der Schubvektorsteuerung 1 ausgerüstet werden.

Das in Fig. 1 gezeigte Luftfahrzeug 2 weist die für einen solchen Flugzeugtyp üblichen, aerodynamischen Ruderflächen 8, 9, 10 auf, welche jeweils aus mehreren, getrennt betätigbaren Teilflächen bestehen können (nicht dargestellt). Auf die Darstellung zusätzlicher Klappensysteme (z.B. an der Tragflügelvorderkante) wurde der Einfachheit halber verzichtet.

Zur Anpassung an unterschiedliche Betriebsarten (mit und ohne Nachbrenner, Reheat/Dry) und Geschwindigkeitsbereiche ist das Triebwerk mit einer im Durchmesser verstellbaren Schubdüse 3 versehen. Koaxial zur Schubdüse 3 und in axialem Abstand zu dieser ist ein um die beiden, orthogonalen Achsen Y-Y und Z-Z bewegliches Ringruder 4 angeordnet, dessen fester Durchmesser größer als der größte einstellbare Durchmesser der Schubdüse 3 ist (Ejektorwirkung, Kühlung). Die kardanische Aufhängung des Ringruders 4 ist der Übersichtlichkeit halber nicht dargestellt. Es ist jedoch sinnvoll, die Aufhängung an der Zelle des Luftfahrzeuges 2 zu befestigen, um statische und dynamische Zusatzbelastungen des Triebwerkes zu vermeiden und um die Nachrüstung an existierenden Flugzeugtypen zu erleichtern (keine Triebwerksänderungen nötig). Die Schwenkachsen Y-Y, Z-Z definieren mit der Triebwerkslängsrichtung X zwei orthogonale Ebenen, in denen die Ruderplatten 5 und 6 angeordnet sind. Die Schwenkachsen und somit die Ruderplatten 5, 6 sind zu der Nick- bzw. der Gierachse des Luftfahrzeuges 2 parallel. In Abhängigkeit von den aerodynamischen Eigenschaften des Luftfahrzeuges 2 kann es genügen, nur eine Schwenkachse und somit nur eine Ruderplatte für das Ringruder 4 vorzusehen. Diese Schwenkachse kann zur Nick- oder Gierachse parallel sein, sie kann aber auch schräg dazu stehen (z.B. in X-Z-Ebene).

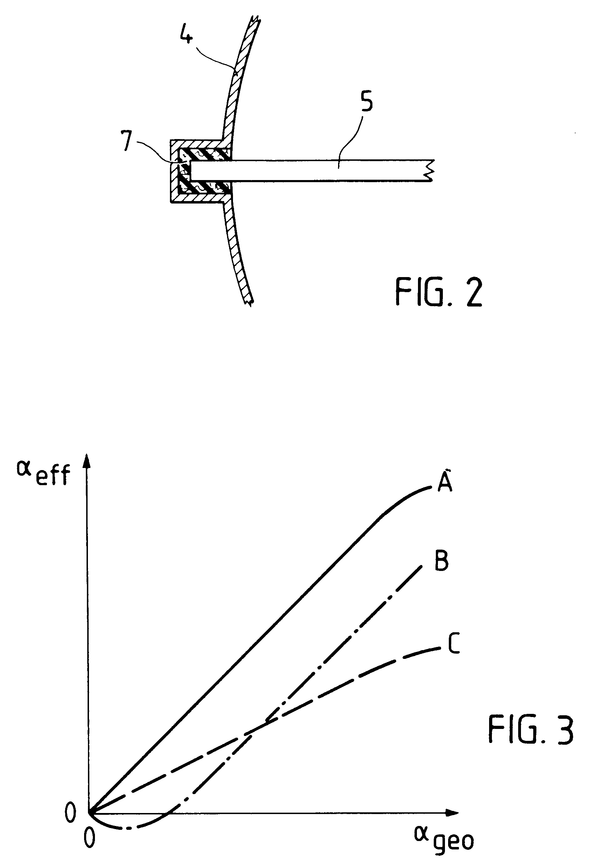

Fig. 2 zeigt quasi die kritische Stelle der Schubvektorsteuerung 1. Dies ist die Verbindungsstelle der Ruderplatten 5 oder 6 mit dem Ringruder 4. Aufgrund der extrem unterschiedlichen Temperaturbeanspruchung (Ringruder max. ca. 300° C, Ruderplatte max. ca. 1700° C) ist es angebracht, die Bauteile 4 und 5 bzw. 4 und 6 aus unterschiedlichen Werkstoffen herzustellen, wobei sich für das Ringruder 4 Stahl, Titan oder kohlefaserverstärkter Kunststoff anbietet. Für die Ruderplatten 5, 6 kommt derzeit - ohne Zusatzkühlung - praktisch nur keramisch beschichteter, kohlefaserverstärkter Kohlenstoff in Betracht. Infolge der großen Temperaturdifferenz und der ggf. stark unterschiedlichen Wärmeausdehnungskoeffizienten (besonders bei Stahl/CFC) können sich an den Verbindungsstellen recht große geometrische Relativverschiebungen einstellen. Damit dabei keine unzulässig hohen Materialspannungen entstehen, ist das Ringruder 4 so gestaltet, daß es die Enden der Ruderplatten 5, 6 in deutlichem Abstand kastenförmig umschließt. Zur Kraftübertragung dient eine gummielastische und thermisch isolierende Zwischenschicht 7 auf der Basis von Silikonkautschuk, in welche zur besseren Wärmeabfuhr und im Hinblick auf höhere Festigkeit noch andere Bestandteile, wie z.B. Fasern aller Art, Metallpartikel, Kohlenstoffteilchen etc., eingelagert sein können. Da die Ruderplatten 5, 6 erwartungsgemäß eine kürzere Lebensdauer haben dürften als das Ringruder 4, ist es sinnvoll, erstere leicht auswechselbar anzuordnen. Dies ist in einfacher Weise dadurch zu erreichen, daß die kastenförmigen Ausbuchtungen des Ringruders 4 abnehmbar gemacht werden, wobei aus Festigkeitsgründen das Ringruder 4 axial länger sein sollte als die Ruderplatten 5, 6, damit es im Bereich seiner Vorder- und Hinterkante noch einen geschlossenen Ring bildet.

Fig. 3 zeigt deutlich, welche Verbesserungen mit der erfindungsgemäßen Schubvektorsteuerung gegenüber Ausführungen nach dem Stand der Technik erzielt werden. In dem gezeigten Diagramm ist der qualitative Verlauf des Strahlablenkwinkels $\alpha_{eff.}$ in Abhängigkeit vom Winkelausschlag $\alpha_{geo}$ des Ruders dargestellt. Die Kurve A gilt für die Erfindung, also für ein Ringruder mit integrierter Ruderplatte, die Kurve B für ein Ringruder ohne Ruderplatte und die Kurve C für eine freistehende Ruderplatte. Es wird deutlich, daß mit der Lösung A bei vorgegebenem Winkelausschlag $\alpha_{geo}$ der größte Strahlablenkwinkel $\alpha_{eff}$ erzielbar ist, d.h. A besitzt den weitaus besten Wirkungsgrad. Der Verlauf der Kurven A und C ist weitgehend linear, dies ist wichtig für eine unproblematische Steuerung und Regelung der Anordnung. Die Kurve B weist einen "Totbereich" oder "Totwinkel" auf, d.h. das Ruder muß erst um einen gewissen Winkel verschwenkt werden, ehe Strahlablenkung eintritt. Dieser "Totwinkel" ändert sich insbesondere in Abhängigkeit vom jeweils eingestellten Schubdüsendurchmesser. Derartige nichtlineare Vorgänge machen eine feinfühlige Steuerung aber praktisch undurchführbar.

Somit besitzt die erfindungsgemäße Lösung bei vergleichbarer, linearer Charakteristik wie eine freistehende Ruderklappe (Kurve C) einen deutlich höheren Wirkungsgrad ($\alpha_{eff}$).

**Patentansprüche**

1. Schubvektorsteuerung (1) für Luftfahrzeuge (2) mit einem oder mehreren Strahltriebwerken, deren Schubdüsen (3) einen zumindest annähernd runden, größenverstellbaren Austrittsquerschnitt besitzen, insbesondere für Hochleistungs-Kampfflugzeuge, mit einem in axialem Abstand hinter jedem Triebwerk angeordneten, um mindestens eine im wesentlichen quer zur Triebwerkslängsrichtung verlaufende Schwenkachse beweglichen Ringruder (4), dessen fester Durchmesser größer ist als der größte einstellbare Durchmesser der zugehörigen Schubdüse, **dadurch gekennzeichnet,** daß im Innenquerschnitt des Ringruders (4) eine oder zwei zumindest weitgehend ebene Ruderplatten (5, 6) fest angeordnet sind, daß jede Ruderplatte (5, 6) mit ihrer Plattenebene einerseits in Längsrichtung des Ringruders (4), andererseits parallel zu der Schwenkachse oder zu einer der Schwenkachsen (Y-Y, Z-Z) des Ringruders (4) ausgerichtet ist, daß die Ruderplatte bzw. die Ruderplatten (5, 6) aus einem ohne Zusatzkühlung bei hohen Temperaturen (z.B. 2000 K) beständigen und mechanisch belastbaren Werkstoff bestehen, und daß die Verbindung (Zwischenschicht 7) zwischen der Ruderplatte bzw. den Ruderplatten (5, 6) und dem Ringruder (4) elastisch und thermisch isolierend ausgeführt ist.

2. Schubvektorsteuerung nach Anspruch 1, **dadurch gekennzeichnet,** daß im Innenquerschnitt des Ringruders (4) eine oder zwei Ruderplatten (5, 6) angeordnet sind, deren Plattenebenen zur Nick- und/oder Gierachse des Luftfahrzeuges (2) parallel stehen.

3. Schubvektorsteuerung nach Anspruch 1 oder 2, **dadurch gekennzeichnet,** daß die Ruderplatte bzw. die Ruderplatten (5, 6) aus kohlefaserverstärktem Kohlenstoff (CFC) bestehen, daß ihre Oberfläche gegen oxidierende Heißgase geschützt ist, z.B. durch eine thermisch aufgespritzte Keramikschicht, und daß die Verbindung jeder Ruderplatte (5, 6) mit dem Ringruder (4) über eine elastische, isolierende und temperaturbeständige Zwischenschicht (7) auf der Basis von Silikonkautschuk erfolgt.

4. Schubvektorsteuerung nach einem oder mehreren der Ansprüche 1 bis 3, **dadurch gekennzeichnet,** daß die Aufhängung bzw. Lagerung des Ringruders (4) an der Zelle des Luftfahrzeuges (2) befestigt ist.

**Claims**

1. Thrust-vector control for aircraft, having one or more jet engines, the thrust nozzles of which have an at least approximately round, size-adjustable outlet cross-section, in particular for high-performance combat aircraft, comprising a circular rudder arranged at an axial distance behind each engine and being movable around at least one pivot axis extending substantially across the longitudinal direction of the engine, characterised in that in the inside cross-section of the circular rudder (4) is arranged a substantially planar diagonally fixed rudder plate (5, 6) respectively parallel to each pivot axis (Y-Y, Z-Z), that the ruddder plate(s) (5, 6) is/are made of a material which remains stable at high temperatures (for example 2000 K) without additional cooling and is mechanically loadable, and that the connection (intermediate layer 7) between rudder plate(s) (5, 6) and annular rudder (4) is arranged to be elastic and thermally insulating.

2. Thrust-vector control according to claim 1, characterised in that in the inside cross-section of the annular rudder (4) are arranged one or two rudder plates (5, 6), the plate planes of which are parallel with the pitch and/or yaw axis of the aircraft (2).

3. Thrust-vector control according to claim 1 or 2, characterised in that the rudder plate(s) (5, 6) is/are made of carbon-fibre reinforced carbon (CFC), that their outside surface is protected from oxydising hot gases, for example by a thermally sprayed-on ceramic layer, and that the connection of the rudder plate (5, 6) with the circular rudder (4) is made by an elastic, insulating and temperature-resistant intermediate layer (7) on a silicon-rubber base.

4. Thrust-vector control according to one or more of claims 1 to 3, characterised in that the suspension or mounting respectively of the circular rudder (4) is attached to the fuselage of the aircraft (2).

**Revendications**

1. Système de commande de vecteur de poussée pour des aéronefs avec un ou plusieurs propulseurs à réaction dont les tuyères de poussée possèdent une section de sortie au moins approximativement ronde et de dimension réglable, en particulier pour des avions de combat de haute performance, comprenant une gouverne annulaire disposée axialement à distance derrière chaque propulseur et mobile autour d'au moins un axe de pivotement sensiblement perpendiculaire à la direction longitudinale du propulseur, caractérisé par le fait que dans la section intérieure de la gouverne annulaire (4) une plaque de gouverne (5, 6) sensiblement plane, parallèle à chaque axe de pivotement (Y-Y, Z-Z) est chaque fois fixée dans le sens diagonal, que la plaque de gouverne/les plaques de gouverne (5, 6) est/ sont constituée(s) d'un matériau résistant aux températures élevées (par exemple 2000 K) sans refroidissement supplémentaire et pouvant être soumis à des charges mécaniques, et que la liaison (couche intermédiaire 7) entre la plaque de gouverne/les plaques de gouverne (5, 6) et la gouverne annulaire (4) est élastique et à isolation thermique.

2. Système de commande de vecteur de poussée selon la revendication 1, caractérisé par le fait que dans la section intérieure de la gouverne annulaire (4) sont disposées une ou deux plaques de gouverne (5, 6) dont les plans sont parallèles à l'axe de tangage et/ou l'axe de lacet de l'aéronef (2).

3. Système de commande de vecteur de poussée selon la revendication 1 ou 2, caractérisé par le fait que la plaque de gouverne/les plaques de gouverne (5, 6) est/sont en carbone renforcé par fibres de carbone (CFC), que leur surface est protégée contre les gaz chauds oxydants, par exemple par une couche céramique appliquée par projection thermique, et que la liaison de chaque plaque de gouverne (5, 6) avec la gouverne annulaire (4) se fait par une couche intermédiaire (7) élastique, isolante et résistant aux températures élevées, à base de caoutchouc silicone.

4. Système de commande de vecteur de poussée selon l'une des revendications 1 à 3, caractérisé par le fait que la suspension ou le palier de la gouverne annulaire (4) est fixé sur la cellule de l'aéronef (2).

FIG.1

FIG. 2

FIG. 3